# EUROPEAN PATENT APPLICATION

(11) **EP 1 207 503 A2**
(43) Date of publication of application: **22.05.2002**
(21) Application number: 01124488.6
(22) Date of filing: 12.10.2001
(51) Int. Cl.: G07F 7/10, G07C 9/00, G07F 19/00

(54) **System and method of authenticating a credit card using a fingerprint**

(30) Priority: 09.11.2000 KR 2000066509
(71) Applicant: Kim, Jinsam, Busanjin-Gu, Busan 614-090 (KR)
(72) Inventor: Kim, Jinsam, Busanjin-Gu, Busan 614-090 (KR)
(74) Representative: Ehlers, Jochen

(57) **Abstract**

The present invention discloses a system and method of certifying the authenticity of a credit card user by employing the digital image of the fingerprint. The present invention discloses a technique of differentiating the genuine user by referring the captured image of the user's fingerprint with the stored fingerprint data. The present invention makes it possible to allow an authorized third party to use the card without loss of security.

## Description

### FIELD OF THE INVENTION

The present invention generally relates to a system and method of certifying the authenticity of a credit card, more particularly, to a smart card technology for preventing the unauthorized use of a financing card including a credit card or a debit card.

### BACKGROUND OF THE INVENTION

Recently, several types of financing card including credit card, debit card, and cash card are widely used for daily life. For instance, a product or a service can be paid with a credit card and then the purchased amount of the credit is deducted from the balance of the associated bank account.

Furthermore, the user of a debit card can purchase a product as long as the balance of the debit card can afford the price of a product. The bearer of a cash card can withdraw some money wherever the automatic teller machine is available.

Consequently, it is important to verify if the bearer of a financing card is the authorized user or not. A traditional method to verify the authentication of a credit card is that the user fill in his signature and then the seller verifies the validity of the signature by comparing the written signature with his bare eyes. The card bearer's signature is not good enough to check the authentication of the genuine ownership of a financing card.

As another approach for preventing unauthorized use of a financing card, the portrait of the card owner is sometimes printed on the surface of a credit card.

Every time when the card bearer uses the credit card, the card bearer can be requested to type in the password for the protection against the unauthorized use of the card.

Even for the above-mentioned methods, however, the unauthorized use of the stolen or missing card cannot be hurdled until the victim of the lost card finishes the report to the card company that the disapproval should be made on the requested transaction.

Further, the electronic commerce under the Internet communication environment is expanding to a remarkable degree due to the rapid development of the information and telecommunication technology.

The development of electronic finance can be divided into three phases: the office automation, the financial network, and the cyber banking. The office automation as the first phase of the electronic finance has been accomplished in the late 1980's.

In the meanwhile, the financial network as the second phase of the electronic finance has been completed quite recently.

Furthermore, the cyber banking as the third era of the electronic finance is regarded to have just started.

The cyber banking can be defined as the Internet banking and is now in boom at most financial institutions and shopping malls.

Even if the business of Internet banking is geared to the principle of commerce under the real name, there still remains a lot of problems that need to be resolved for the secure electronic transaction through the Internet.

### SUMMARY OF THE INVENTION

In view of these problems, there is a need in the art for a system and method of authenticating the user of a financing card for the prevention against the unauthorized use due to a loss of a card or a robbery as well as the malicious attack through the network.

Accordingly, it is an object of the present invention to provide a system and method for preventing an unauthorized user from using a financing card such as a credit card, a debit card, and a cash card.

It is a further object of the present invention to provide a system and method for authenticating the user of a financing card when the approval of electronic transaction is made for the settlement of an electronic commerce.

Yet it is another object of the present invention to provide a system and method of authenticating the genuine owner of a financing card when the financing card is issued to the applicant at the initial stage of issuance.

### BRIEF DESCRIPTION OF THE DRAWINGS

Further features of the present invention will become apparent from a description of a system and method of authenticating the user and/or the electronic transaction, taken in conjunction with the accompanying drawings of the preferred embodiment of the invention, which, however, should not be taken to be limitative to the invention, but are for explanation and understanding only.

In the drawings:
FIG.1 is a schematic block diagram of a preferred embodiment of an authentication system for a smart financing card in accordance with the present invention.
FIGS.2A and 2B are schematic diagrams illustrating a preferred embodiment of a card reader prepared at an affiliated shop in accordance with the present invention.
FIG.3 is a schematic diagram illustrating a preferred embodiment of a wire interface between a traditional magnetic card reader and the smart card reader equipped with a fingerprint input device in accordance with the present invention.
Fig.4 is a schematic diagram illustrating a preferred embodiment of a wireless interface between a traditional magnetic card reader and the wireless smart card reader equipped with a fingerprint input device in accordance with the present invention.
FIG.5 is a schematic diagram illustrating a process flow for the issuance of a financing smart card storing a registered fingerprint in the memory in accordance with the present invention.
FIG.6 is a schematic diagram illustrating a process flow for the registration of the fingerprint of the user at the stage of issuing a financing smart card in accordance with the present invention.
FIG.7 is a schematic diagram illustrating a process flow for the settlement of the transaction through a fingerprint-registered financing smart card in accordance with the present invention.
FIG.8 is a schematic diagram illustrating a process flow for a third party's authorized use of a fingerprint-registered financing smart card in accordance with the present invention.
FIGS.9A and 9B are schematic diagrams illustrating preferred embodiments of automatic teller machines (ATMs) for the use of a fingerprint-registered financing smart card in accordance with the present invention.

### DETAILED DESCRIPTION OF THE PREFERRED EMBODIMENT OF THE INVENTION

The present invention will be explained in detail with reference to the accompanying drawings.

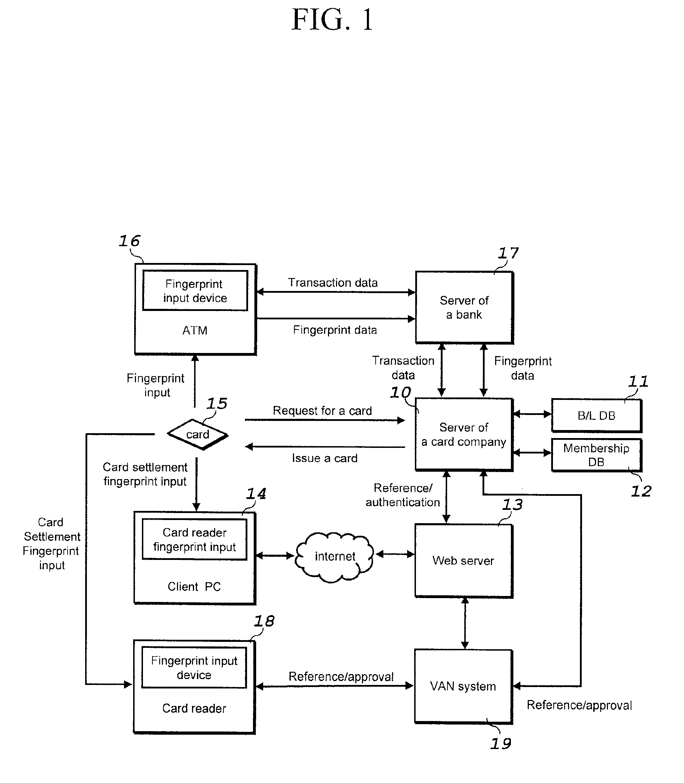

FIG.1 is a schematic block diagram illustrating a preferred embodiment of an authentication system for a fingerprint-registered financing smart card in accordance with the present invention. The financing smart card in the specification includes a credit card, a debit card, and a cash card.

The authentication system comprises a fingerprint-registered financing smart card 15 and a host server of a card company 10 issuing the financing smart card in response to the request of the applicant.

The authentication system in accordance with the present invention further comprises a server of a financing company 17 that communicates the information about the financial credit and the fingerprint data of the user with the aforementioned server 10 of a card company.

Additionally, an ATM (automatic teller machine) 16 that processes the financial transaction and the verification of fingerprint images is depicted in FIG.1.

The card reader 18 takes the image of the fingerprint of the user and requests the verification of the authenticity of the card user to the servers 10 and 17.

The VAN (value-added network) 19 is responsible for an authenticating process through fingerprint images and for the inquiry about the credit status of the user.

The card reader 18 prepared at an affiliated shop includes a fingerprint reader and a processing unit for performing the comparison between the fingerprint taken from the fingerprint reader and the fingerprint image stored in the fingerprint-registered smart card in accordance with the present invention.

The server 10 of the card company is connected both to the B/L database 11 that stores the list of a credit delinquent and simultaneously to the membership database 12 that stores the personal information for a fingerprint-registered card.

As a preferred embodiment in accordance with the present invention, the server 10 of the card company can further comprise a client computer 14 that is connected to the server 10 through Internet.

The client computer 14 includes a fingerprint-card reader and a fingerprint input device. As a preferred embodiment in accordance with the invention, a fingerprint-card reader and a fingerprint input device could be implemented in a single external unit through the USE port.

More preferably, the fingerprint-card reader and the fingerprint input device could be incorporated into the mainframe of a client computer 14 for the convenience of the user.

Now, the process flow for the operation of the authentication system in accordance with the present invention is now described in the followings.

First of all, the applicant applies for a financing smart card with fingerprint data (we will call "fingerprint-registered financing smart card" from now on).

During the applying procedure, the fingerprint of an applicant is taken through a fingerprint input device. The fingerprint is now transformed into a digital image, which is thereafter stored in the memory of the financing smart card.

Simultaneously, the information about the applicant is sent to the server 10 of the card company. The permission for the issuance of a financing card to the applicant is made with a B/L reference. Preferably, the B/L reference is made at a B/L database 11 registered on a financing network.

If the credit of the applicant is approved with reference to the B/L database 11, the membership information of the applicant is stored and a new financing smart card is issued.

The financing card in accordance with the present invention has features in that the security is checked through the fingerprint as well as the password of the user.

More preferably, the fingerprint information can function as an encryption key for authenticating the user. In the meanwhile, the card company or the bank issues the financing smart card with a blank memory for later registration of the fingerprint.

The blank memory prepared in the financing smart card in accordance with the present invention stores the fingerprint data of the user, which is taken at an ATM having a fingerprint reader.

The stored digital image data of the user's fingerprint user can function as an encryption key for the security of the financing smart card.

As a preferred embodiment in accordance with the present invention, the image data about the fingerprint can be kept at a database 12 of the card company's server 10 and can be referred every time when the fingerprint reader 18 at an affiliated shop requests the transmittal of the image data of the registered fingerprint.

More preferably, the authentication of the user can be conducted by comparing the fingerprint images taken from the fingerprint reader implemented with the ATM and the reference fingerprint image accessed from the memory of the fingerprint-registered financing smart card.

In this case, the fingerprint image data taken from the fingerprint reader is erased upon the completion of the comparison process for the sake of security.

As a preferred embodiment for the fingerprint-registered financing smart card in accordance with the present invention, the fingerprint-registered financing smart card can be inserted into the input of fingerprint-card reader. Then, the inserted card is identified and the card reader transmits an inquiry about the credit status through the VAN system 19.

Preferably, the credit check includes the report of robbery, missing card, and credit delinquent via reference to the B/L database. Additionally, the credit check can further include a process of checking if the current settlement goes beyond the balance of the account.

If the approval of the above-mentioned credit check is made, the fingerprint card reader requests the input of the fingerprint of the user.

Thereafter, the fingerprint image taken from the fingerprint card reader is compared with that stored in the memory of the fingerprint-registered card. If the agreement between the input fingerprint image and the stored reference has been made, the transaction is finally approved.

As a consequence, the unauthorized use of a third party is totally excluded because of the crosschecking capability of the authentication system in accordance with the present invention.

As another preferred embodiment in accordance with the present invention, the reference fingerprint information can be accessed from the membership database 12 if the reference fingerprint information is not stored in the memory of the fingerprint-registered card.

The approach of accessing the reference fingerprint image through the network can be applicable to the electronic commerce on Internet.

For instance, if the internet shopper wants to pay for the purchased item on internet, the shopper can insert his fingerprint-registered financing card into the fingerprint card reader and put his thumb on the input device of a fingerprint card reader wherein the fingerprint card reader is implemented in a client computer.

The personal information including the fingerprint image is then transmitted to the servers 10 and VAN system 19 of the corresponding card company and/or the associated bank through the web server 13 for the sake of credit reference and authentication of genuine user.

In this case, the authentication of genuine user is performed through the comparison of the fingerprint images. Once the authentication of genuine user has been verified through the comparison between the registered fingerprint information and the captured on-line fingerprint image, an approval is made for the settlement of the electronic commerce.

In case when the reference fingerprint image is stored in the memory of the financing smart card, the shopper should provide an electronic commerce terminal with his fingerprint by exposing his thumb on the input device of the fingerprint card reader.

When the comparison between the captured fingerprint image of the shopper and the reference fingerprint image stored in the card turns out to be coincident, the requested settlement for the electronic commerce can be approved.

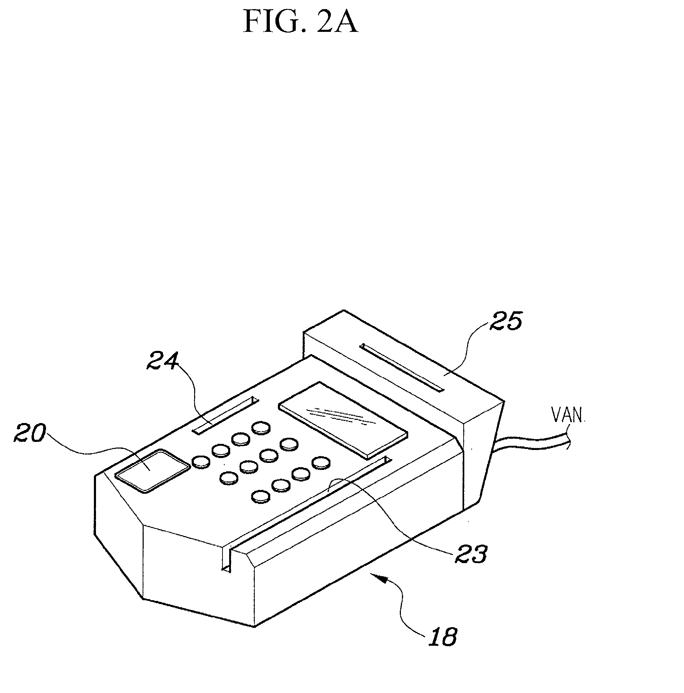

FIG.2A is a schematic diagram illustrating a preferred embodiment of a fingerprint card reader in accordance with the present invention. The fingerprint card reader 18 comprises an M/S card slot 23, a printer 25, a smart card slot 24, and an input device 20 for capturing the fingerprint.

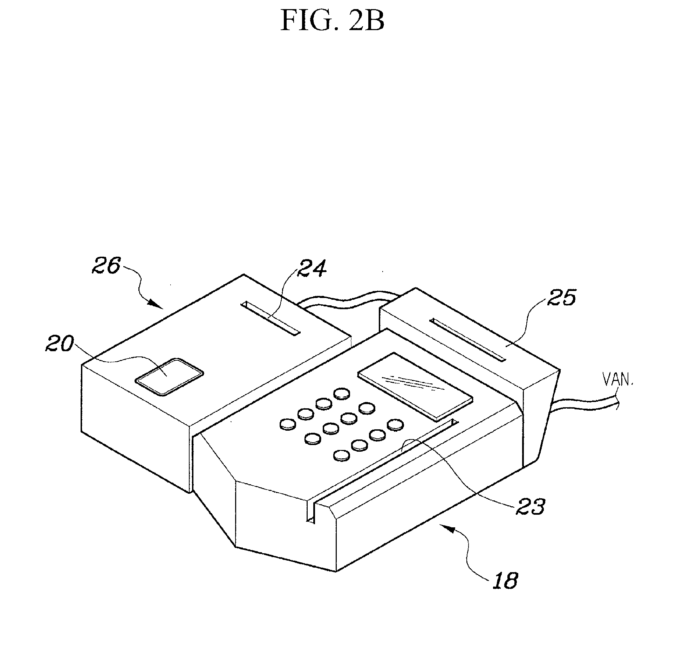

FIG.2B is a schematic diagram illustrating a preferred embodiment of a fingerprint card reader in accordance with the present invention interfaced with the traditional M/S type card reader.

Referring to FIG.2B, a fingerprint card reader 26 having an input device 20 for capturing the fingerprint and smart card slot 24 is interfaced with the traditional M/S type card reader 18.

The preferred embodiment depicted in FIG.2B makes it possible for both a smart card (a fingerprint-registered card) and a traditional M/S type card to share a printer 25 and a display window for displaying the credit status, and the amount of settlement, etc.

The fingerprint information captured from the fingerprint-capturing input device 20 can be processed with either an interfacing program or an interfacing device in order to comply with the traditional processing method of credit card settlement.

In other words, a comparison between the captured images of the user's fingerprint and the reference image registered in the card can be good enough to authenticate the genuineness of the card bearer for the prevention of the unauthorized use.

It may not be possibly preferred to implement the fingerprint-capturing device at the card reader.

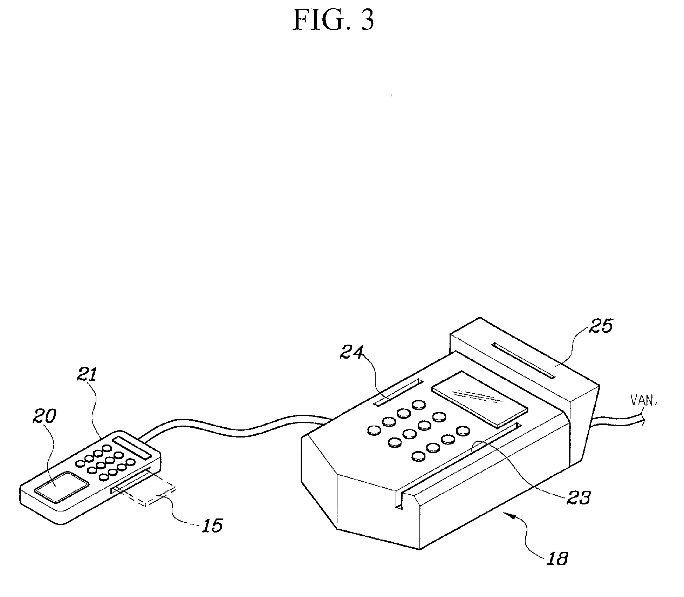

FIG.3 is a schematic diagram illustrating a preferred embodiment of a wire interface between the traditional magnetic card reader and the fingerprint card reader in accordance with the present invention.

Referring to FIG.3, a wired fingerprint-capturing terminal 21 having a fingerprint input device 20 is interfaced with a card reader 18 having a reading capability both of traditional M/S type card and of smart card.

The wired fingerprint-capturing terminal 21 shares a print 25, and a slot for reading a card 15. The printer 25 can be a traditional printer for printing a card receipt.
Furthermore, the printer 25 can be identically used for a printer implemented at an ATM machine.

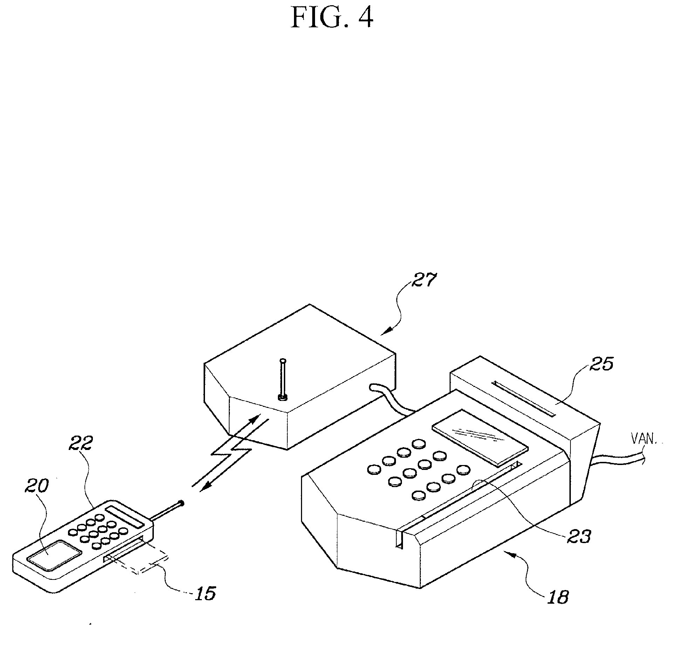

FIG.4 is a schematic diagram illustrating a preferred embodiment of a wireless interface between the traditional M/S type card reader and the fingerprint-registered card reader in accordance with the present invention.

Referring to FIG.4, an adaptor 27 for wireless communication is implemented at a card reader 18. The adaptor 27 communicates with a wireless fingerprint-capturing terminal having a fingerprint-capturing input device 20 and a card slot 22.

The adaptor 27 sends the information about the captured fingerprint image, and the amount of the settled money, etc.

For the processing of an electronic transaction, a fingerprint-registered financing card 15 is inserted in a slot of a terminal 22 and then the fingerprint of the user is exposed to the input device 20.

As a preferred embodiment in accordance with the present invention, the authentication of the genuineness of the user can be immediately verified if the registered fingerprint is stored in the memory of the card 15.

Thereafter, the information including the amount of money for electronic transaction and personal information associated with the card is wirelessly transmitted to the card terminal 18 through the adaptor 27.

The card reader 18 now has a connection with a server 10 of a card company and makes inquiries about the limit of the financial settlement, and B/L, etc.

As a preferred embodiment of a fingerprint-registered card 15 in accordance with the present invention, the fingerprint of the owner is pre-registered at the card-issuing step and is stored in the memory of the card 15.

As another preferred embodiment of a fingerprint-registered card 15 in accordance with the present invention, the memory of the card is left blank at the card-issuing step and then the fingerprint of the authorized user is captured at a terminal such as an ATM for the storage in the memory of the card later.

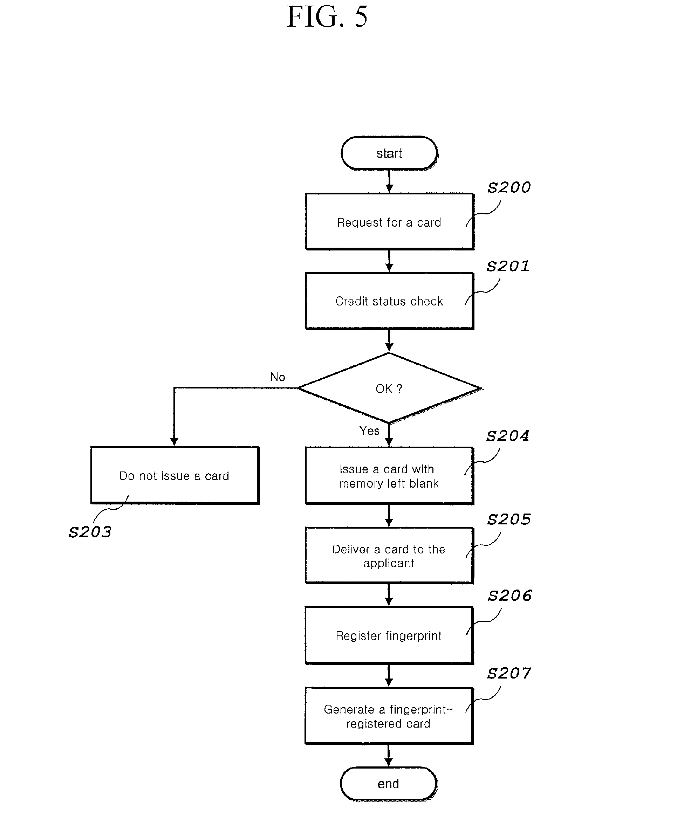

FIG.5 is a schematic diagram illustrating a process flow for the issuance of a fingerprint-registered financing card in accordance with the present invention.

Referring to FIG.5, when a request for a fingerprint-registered financing card is made (step S200), the credit status of the applicant is checked with the reference of the B/L database (step S201).

When the credit of the applicant is approved, the next steps for the issuance of the financing card will follow. It should be noted that the room in the memory of the card for storing the fingerprint image data is left blank for later use (step S204).

If the financing card is delivered to the applicant (step S205), the applicant registers his fingerprint by employing an ATM machine that has a fingerprint input device (step S206).

As a preferred embodiment in accordance with the invention, the memory device in the card for storing the image data of the applicant's fingerprint can be a PROM (programmable read-only memory) .

Therefore, the image data of the applicant's fingerprint can also be stored by employing a personal card terminal having a writing capability on a memory.

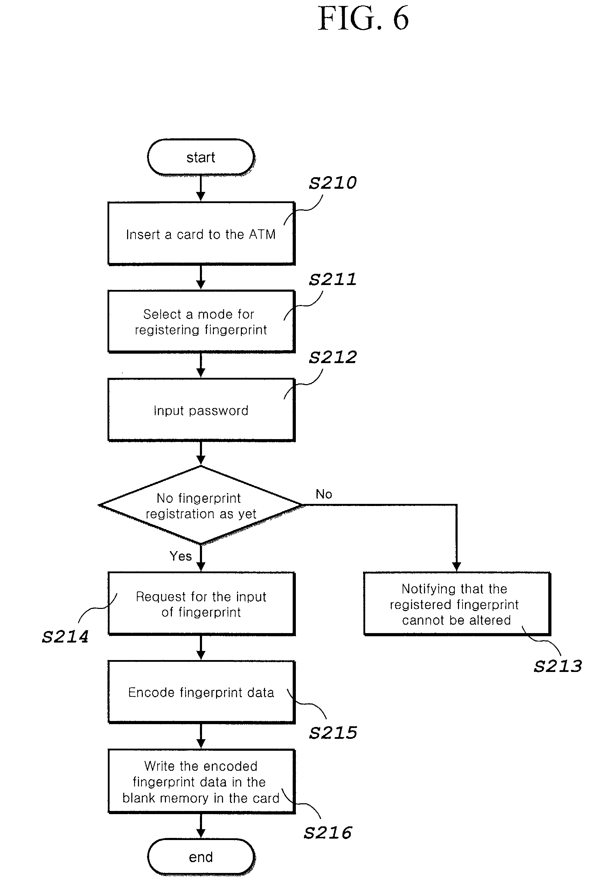

FIG.6 is a schematic diagram illustrating a process flow for the registration of the fingerprint at the stage of issuing a financing smart card in accordance with the present invention.

Referring to FIG.6, a new financing smart card with blank memory is inserted into an ATM for the registration of the fingerprint (step S210). Therefore, the operational mode for registration is selected for registering the fingerprint (step S211) and then the ATM machine requires the key-in of the password (step S212).

As a preferred embodiment of the present invention, the password can be the one that has been registered by the applicant at the initial applying step.

In this case, the password works as a secondary key that allows an authorized third party to use the financing card in accordance with the invention.

In other words, either the applicant or the authorized third party inserts his financing card into the slot of the ATM machine and then type in the password. If the keyed-in password is in agreement with the registered one, the ATM checks if the fingerprint image is stored in the memory of the inserted card.

In case when the memory of the inserted card is left blank, the ATM asks the user to register his fingerprint by exposing his fingerprint to the fingerprint input device of the ATM (step S214).

In case when the fingerprint image is already stored in the memory of the inserted card, the ATM responds to the user by advising him that the fingerprint has been already registered and cannot be altered (step S213).

In the meanwhile, the fingerprint image entered through the input device of the ATM is encoded (step S215) and stored in the blank region of the memory of the card (step S216).

As a preferred embodiment in accordance with the present invention, a one-time programmable (OTP) memory can be employed as a memory in the financing card for enhancing the security level of the card.

Therefore, the registered fingerprint functions as a first guard against the unauthorized use prior to the password.

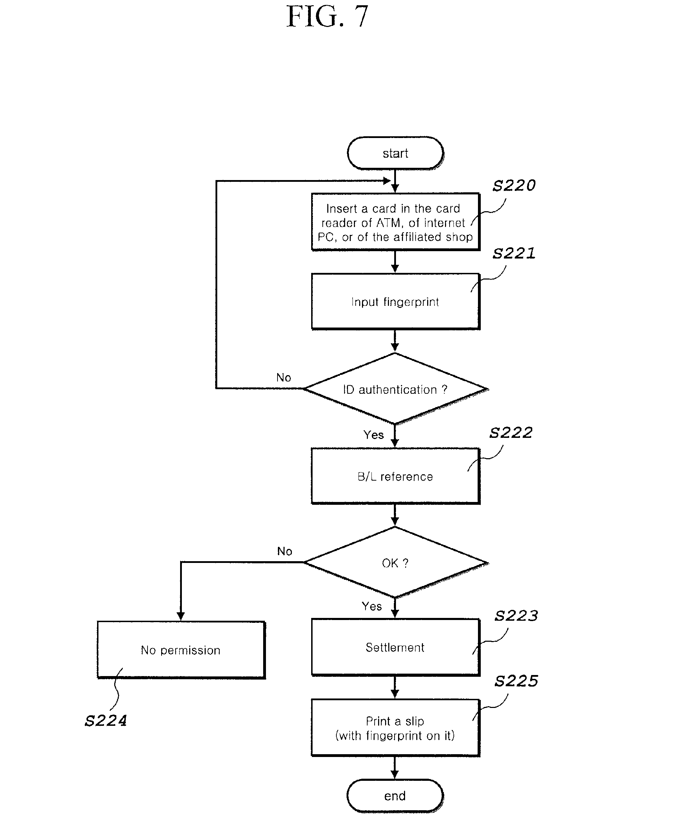

FIG.7 is a schematic diagram illustrating a process flow for the settlement of the transaction through the fingerprint-registered financing card in accordance with the present invention.

For the settlement of the transaction, the fingerprint-registered financing card is inserted in the slot of the card reader, followed by an exposing step of his thumb to the fingerprint input device for capturing the fingerprint image (step S220).

The card reader checks the genuineness of the user by comparing the captured fingerprint image and the reference image accessed from the memory of the card (step S221).

In case when the captured fingerprint image fails to agree with the reference image, the card reader requests the user to re-insert the card and to input his fingerprint once again.

If the user turns out to be an authorized person, to the contrary, the card reader continues to check the B/L database (step S222).

The B/L database prevents from the unauthorized use of the card (step S224). After the B/L check, the requested transaction for the purchase is now settled (step S223).

Preferably, the fingerprint information of the card user can also be shown on the card slip, printed as a consequence of the settlement of the transaction (step S224).

More preferably, the input procedure of the user's fingerprint into the fingerprint input device of the card reader could replace the traditional signature of the user.

Consequently, the present invention provides a method of tracing the unauthorized use of a financing card even in cases when the signature is not mandatory.

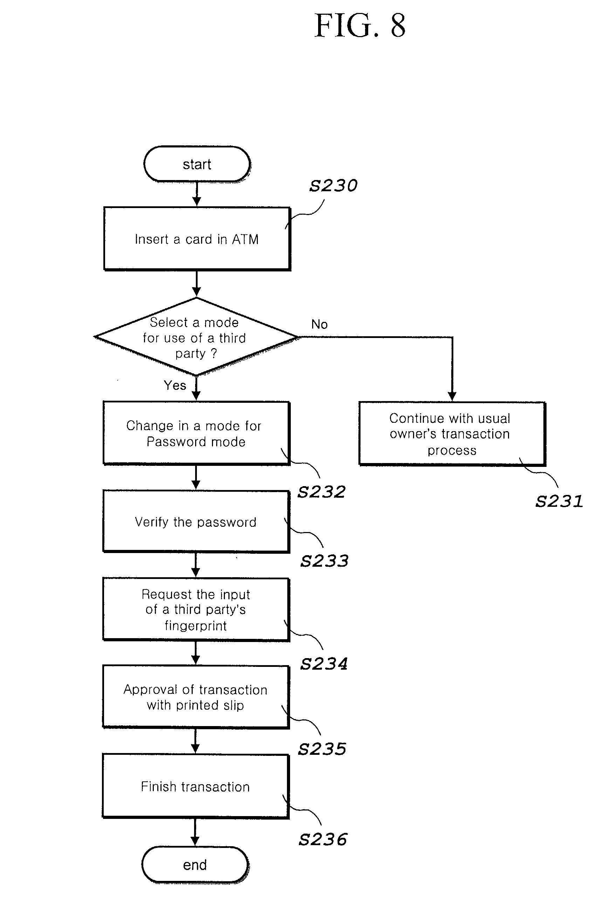

FIG.8 is a schematic diagram illustrating a process flow for a third party's authorized use of the card in accordance with the present invention.

Referring to FIG.8, the owner of the card advises a third party of the password and let the third party to perform a transaction or a cash withdrawal in an authorized manner.

An authorized third party can withdraw or transfer money, or perform a transaction through the following procedure.

First of all, the authorized third party inserts the card into the slot of an ATM, a credit inquiry machine, or an e-commerce terminal (step S230). Thereafter, the operational mode of use by an authorized third party is selected via the key button prepared on the terminal.

In this case, if the operational mode of use by an authorized third party is not provided, the procedure for verifying the genuineness of the user will be executed (step S231).

Preferably, the feature of allowing an authorized third party to use the card will be implemented in a client computer as software.

If the operational mode of use by an authorized third party is chosen, the third party is requested to key in the password prior to the input of his fingerprint (step S232). Then the password is checked for verifying the authority of the third party (step S233).

Therefore, the card reader requests the third party to input his fingerprint into the fingerprint input device (step S234).

The fingerprint data of the authorized user is stored in the internal memory of the ATM, and thereby the transaction data as well as the personal information of the authorized user is kept in databases of a bank or a card company.

As a preferred embodiment in accordance with the invention, the transaction data including the fingerprint image can be kept for a couple of month and then destroyed unless a report regarding a financial accident related to the third party's transaction is submitted.

Referring to FIG.8 again, an approval is made after checking the B/L database and the limit of allowed transaction, followed by the issuance of a transaction slip (step S235). Preferably, the fingerprint information of the third party is printed on the transaction slip.

Therefore, the present invention alleviates the inconvenience from the partially fingerprint-referring process by allowing an authorized third party to use the card.

As a preferred embodiment in accordance with the present invention, an identification number such as driver's license number or social security number can be entered together with the fingerprint.

More preferably, the personal information including the fingerprint information of a third party can be printed on a transaction slip.

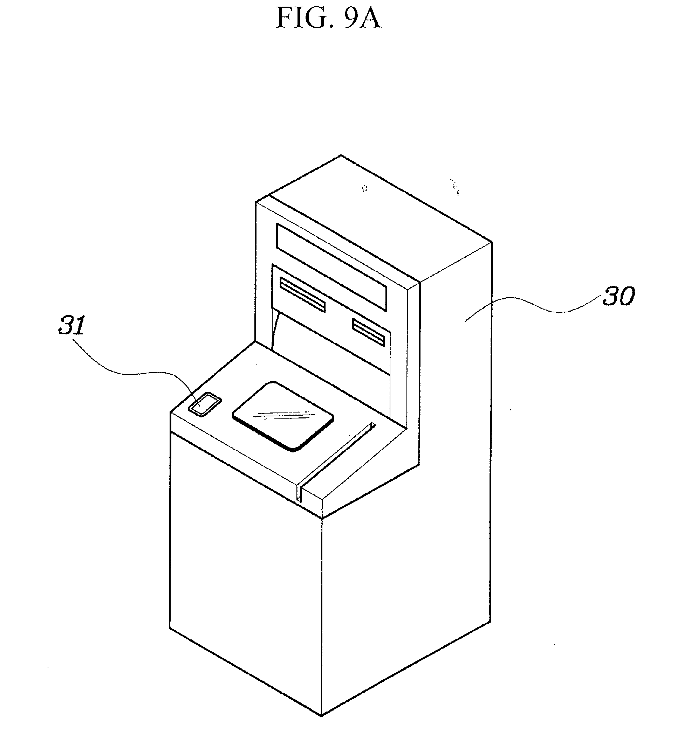

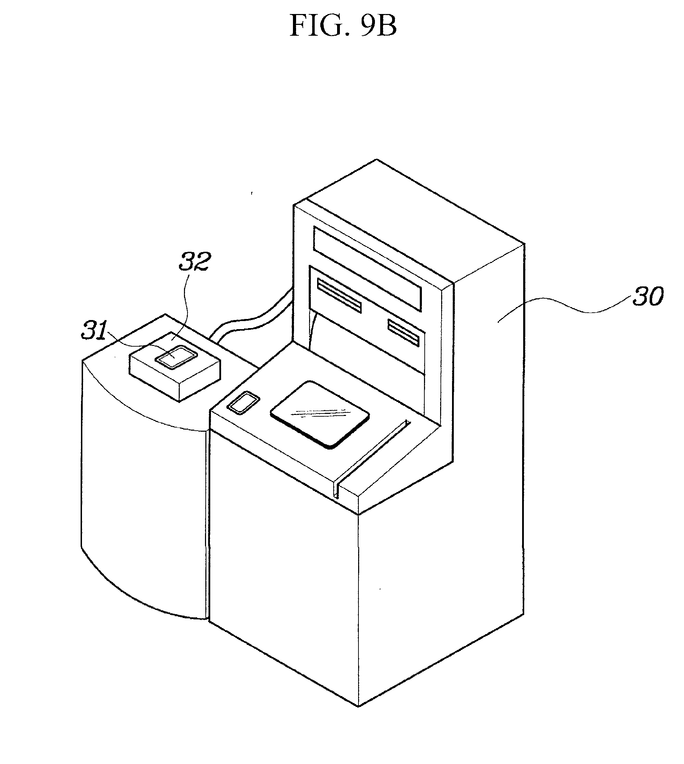

FIGS.9A and 9B are schematic diagrams illustrating preferred embodiments of automatic teller machines (ATMs) for the fingerprint-registered financing card in accordance with the present invention.

Referring to FIG.9A, a fingerprint input device 31 is implemented on the front panel of an ATM 30. Referring to FIG.9B, a fingerprint input device 31 is implement in a separate unit wire-connected to the ATM 30.

Preferably, the printer prints the fingerprint information on the transaction slip, which makes it possible to confirm the transaction of a third party later.

The card slip having fingerprint information fulfills a good evidence for the transaction in case of a financial accident.

Although the invention has been illustrated and described with respect to exemplary embodiments thereof, it should be understood by those skilled in the art that various other changes, omissions and additions may be made therein and thereto, without departing from the spirit and scope of the present invention.

Therefore, the present invention should not be understood as limited to the specific embodiment set forth above but to include all possible embodiments which can be embodies within a scope encompassed and equivalents thereof with respect to the feature set forth in the appended claims.

## Claims

1. A method of authenticating the transaction via financing card, comprising steps of:
(a) issuing a financing card having an internal memory for storing the fingerprint of the card owner;
(b) reading out the fingerprint of the user through the fingerprint input device and referring the fingerprint data and the associated card number stored in said internal memory;
(c) authenticating the user by comparing said read-out fingerprint with said reference fingerprint data;
(d) referring a B/L database in order to check the credit status of said financing card when said authenticating step of (c) is passed; and
(e) approving a requested transaction when said credit-checking step of (d) is passed.

2. The method as set forth in Claim 1 wherein said internal memory is left blank at the issuing step of (a) and the fingerprint image is registered later in said internal memory through a fingerprint input device implement in an ATM.

3. A method of authenticating the transaction via financing card, comprising steps of:
(a) requesting a user to enter the pre-registered password in case when the operational mode for a third party's use is selected;
(b) requesting said user to input the fingerprint of said user's thumb once the entered password coincides with the pre-registered password at step (a);
(c) storing the fingerprint of said user at a memory of the ATM and referring to the B/L database for checking the credit status; and
(d) approving the requested transaction and printing the personal information of said user including the fingerprint on the transaction slip.

4. A system of authenticating the transaction via financing card, comprising:
A fingerprint-registered financing card;
a server of a card company performing the procedures for the issuance of said fingerprint-registered financing card;
a card reader requesting a user to input the user's fingerprint and checking the authenticity by referring the reference fingerprint and B/L database;
an ATM processing said requested transaction and taking the fingerprint image of the user;
a server of a financial institution, connected to said server of a card company, communicating data including the fingerprint information with said ATM; and
a VAN performing network service for referring the B/L database or the fingerprint data.

5. The system as set forth in Claim 4 wherein said card reader further comprises a fingerprint input device and a processor for reading out the fingerprint of the user and comparing the read-out fingerprint with the reference fingerprint image.

6. The system as set forth in Claim 4 wherein said server of a card company further comprises:
a B/L database storing a list of persons having poor credit status; and
a membership database that stores personal including the fingerprint.

7. The system as set forth in Claim 4 wherein said server of a card company further comprises a web server connecting:
a client computer having a card reader or a fingerprint input device;
a card terminal having a fingerprint input device;
a card company's server; or
a financial institution's server.

8. The system as set forth in Claim 4 wherein said card reader comprises either a wired fingerprint-capturing device or a wireless fingerprint-capturing device.

9. The system as set forth in Claim 4 wherein said card reader further comprises an external interface module for reading out the fingerprint to the traditional credit card transaction device.
